Europäisches Patentamt

(19) European Patent Office

Office européen des brevets

(11) Publication number: **0 222 468**
**B1**

# (12) EUROPEAN PATENT SPECIFICATION

(45) Date of publication of the patent specification:
**29.11.89**

(51) Int. Cl.⁴: **G 01 M 11/00**

(21) Application number: **86305855.8**

(22) Date of filing: **30.07.86**

(54) Method and apparatus for measuring single mode fiber mode field radius.

(30) Priority: **05.11.85 CA 494656**

(43) Date of publication of application:
**20.05.87 Bulletin 87/21**

(45) Publication of the grant of the patent:
**29.11.89 Bulletin 89/48**

(84) Designated Contracting States:
**DE FR GB NL**

(56) References cited:
**EP-A- 0 077 259**

**ELECTRONICS LETTERS, vol. 17, no. 13, June 25, 1981, London C.A. MILLAR "Direct method of determinig equivalent-step-index profiles for monomode fibres" pages 458-460**

(73) Proprietor: **NORTHERN TELECOM LIMITED, 600 de la Gauchetiere Street West, Montreal Quebec H3B 4N7 (CA)**

(72) Inventor: **Lowe, Richard Stephen, 42 McIntosh Way, Kanata Ontario K2L 2P6 (CA)**
Inventor: **Saravanos, Constantine, 110 Tripp Crescent, Nepean Ontario K2J 1M7 (CA)**

(74) Representative: **Crawford, Andrew Birkby et al, A.A. THORNTON & CO. Northumberland House 303-306 High Holborn, London WC1V 7LE (GB)**

## Description

This invention relates to a method and test set for measuring the fundamental mode field radius of a single-mode fiber.

The fundamental-mode field radius of a single-mode fiber is a key parameter in characterizing fibers. A knowledge of the spot size, which essentially is a measure of how centrally confined is the light intensity distribution within the fiber, can be used to predict certain fiber characteristics, such as splice loss and microbending loss.

The mode field radius «W» has for some years been defined on the assumption that the near and far field distributions (i.e. the distributions respectively within a fiber and spaced from the fiber output face) are Gaussian in shape. On this assumption it can be shown that:

$$W_G = \left[ \frac{\sqrt{2\pi}\tan\theta}{\lambda} \right]^{-1} \left[ -\log_e \left[ 1 - \frac{P(\theta)}{P_{max}} \right] \right]^{1/2} \quad (1)$$

where P is the power passing through an aperture which subtends an angle $2\theta$ at the fiber emitting face;

$P_{max}$ is the total emitted power; and

$\lambda$ is the center wavelength of the emitted light.

However the field only resembles a Gaussian distribution near the $LP_{11}$ cutoff i.e. the lower wavelength limit beyond which propagation whithin the fiber becomes multimode instead of single mode. Farther from cutoff the field is no longer Gaussian and an expression for mode field radius proposed by Petermann (Electronics Letters, 19, No. 18, 1983, pages 712-714) is:

$$W_P^2 = \frac{2P_{max}}{\left[ \frac{2\pi}{\lambda} \right]^2 \int_o^\infty \frac{dP}{d\theta} \sin^2\theta d\theta} \quad (2)$$

In each of these cases the mode field radius «W» is a function of P, $\theta$ and $\lambda$.

It is known to measure mode field radius with a variable aperture. However it is difficult to construct and operate a small aperture so that within a range of aperture sizes, the aperture retains its circularity.

According to one aspect of the present invention there is provided a method for determining the mode field radius «W» of a single mode optical fiber comprising projecting light through the optical fiber, positioning a fixed diameter aperture in front of an exit face of the optical fiber in the far field pattern of light emitted therefrom, moving the aperture on the axis of emitted light through a series of acceptance angles $\theta$, measuring the power P passing through the aperture corresponding to said acceptance angles to obtain a relationship between P and $\theta$ and obtaining a value of mode field radius «W» in terms of $\lambda$, P and $\theta$.

According to another aspect of the invention, there is provided a test set for determining the mode field radius «W» of a single mode optical fiber comprising, projection means for projecting light of wavelength $\lambda$ through the fiber, a fixed diameter aperture located in front of an exit face of the optical fiber within a far field pattern of light emitted therefrom, carriage means for moving the aperture on the axis of light emitted from the fiber through a series of acceptance angles $\theta$, means for measuring the power P passing through the aperture corresponding to the acceptance angles, and signal processing means for deriving a value of W in terms of $\lambda$, $\theta$ and P.

Preferably the projection means comprises a light source and a monochromator for wavelength selection. The carriage means can comprise a mounting for a body defining said aperture, a linear track parallel to the axis of the fiber, a bearing between said mounting and the linear track, and a stepper motor for driving the mounting along the track. The measuring means can comprise a photodetector such as an InGaAs PIN photodiode, an amplifier for amplifying the photodiode output and a lens to focus light passed by said aperture onto the photodiode. To improve signal to noise ratio of the measuring means, the apparatus can further include a chopper for establishing an AC component on light projected into the fiber, the amplifier being a lock-in amplifier tuned to the frequency of said chopper. Said signal processor can have a first output to control the stepper motor, the processor being programmed to move said carriage through a predetermined sequence of steps. The processor can have a second output to the monochromator whereby to vary the output wavelength within a predetermined range.

An embodiment of the invention will now be described by way of example with reference to the accompanying drawings in which:

Figure 1 shows a block schematic view of a test set according to the invention; and

Figure 2 is a graphical representation of far field output power from a fiber end face as a function of acceptance angle $\theta$ at spaced wavelengths 1300 and 1550 nanometers.

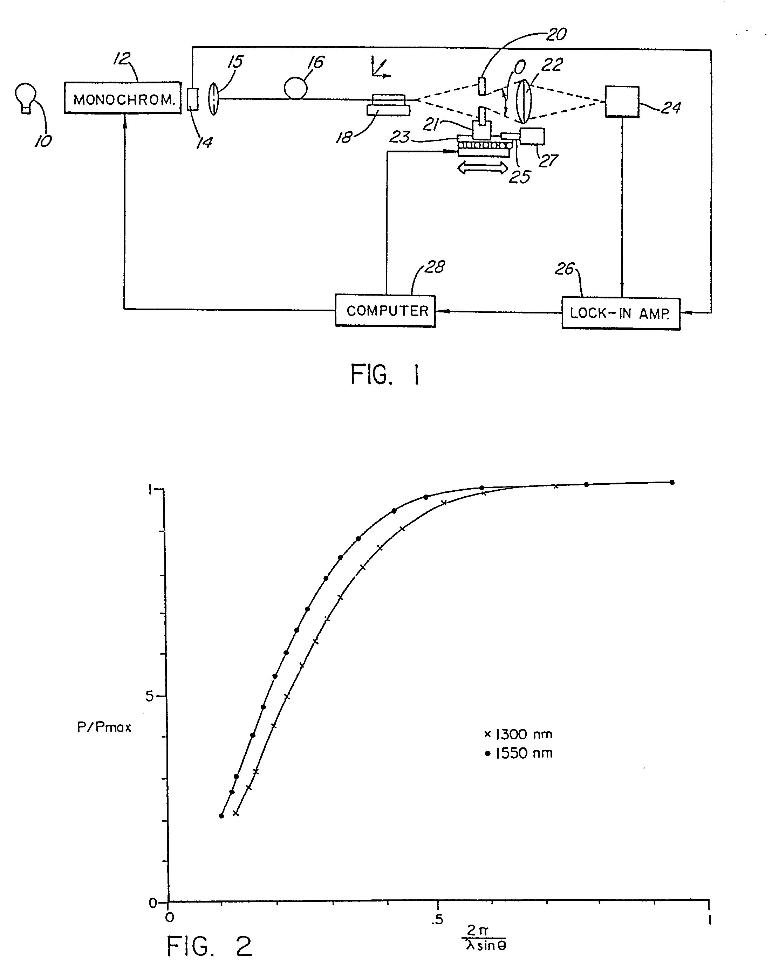

Referring in detail to Figure 1, there is shown a quartz-halogen light source 10 emitting into a monochromator 12. The monochromator transmits only a narrow band of wavelengths, the monochromator output being modulated by a chopper 14 set to a frequency of 400 Hz. The monochromator output is directed through a focussing lens 15 to one end of a single mode fiber 16 under test. The remote end of the fiber is cleaved to produce a cleave angle less than 1° and is accurately fixed to a supporting pedestal 18 with an end portion of the fiber extending linearly along a predetermined axis. Spaced from the end of the fiber is a rigid metal disc 20 having a circular aperture of radius 1.5 millimeters. The lower edge of the disc 20 is mounted on a vertical post 21 which in turn is fixed to a slide 23 whose axis of motion is co-linear with the fiber-detector optical axis. A movable portion of the slide 23 is driven axially by a stepper motor driven micrometer 25. The stepper motor 27 is bolted to a separate bearing slide (not shown) to allow it to traverse axially as the micrometer drives the aperture.

The pedestal 18 and the disc supporting structure are both mounted on micromanipulators (not shown) to permit accurate axial alignment of the fiber end and the apertured disc.

For a single mode fiber having a core diameter of 9 microns and a cladding diameter of 125 microns, the apertured disc 20 is spaced from the fiber end by about 50 millimeters. Beyond the apertured disc 20 is a pair of lenses 22 which are coated to reduce reflection and are achromate to minimize chromatic aberration. The lenses focus far field light emitted by the fiber onto an InGaAs PIN photodiode 24. The output of the photodiode is taken to a lock-in amplifier 26 which is synchronized with the chopper frequency.

The amplifier output is taken to a microprocessor 28 which has outputs to both the monochromator 12 to vary the propagation wavelength and to the stepper motor 23 whereby the apertured disc 20 can be stepped axially through a predetermined sequence to change angle $\theta$.

In use, light of narrow spectral width is directed into the fiber 16 and is emitted from the fiber remote end where it diverges towards the aperture. Only a certain fraction P of the total output light $P_{max}$ incident on the apertured disc 20 is directed onto the photodetector 24 and this produces an electrical output which is amplified before being directed to the microprocessor 28. At the microprocessor a detected light P corresponding to the aperture position and thus to a predetermined acceptance angle $\theta$ is measured. Thus for a particular wavelength $\lambda$, a range of power values (P$\theta$) corresponding to a range of acceptance angles $\theta$ are derived.

As previously mentioned, the mode field radius «W» can be derived using a number of expressions for the near- and far-field intensity.

The most commonly used assumes a Gaussian far-field distribution from which a mode field radius $W_G$ can be derived thus

$$W_G = 2 \left[ \frac{2\pi\tan\theta}{\lambda} \right]^2 \log \left[ 1 - \frac{P(\theta)}{P_{max}} \right]^{1/2} \qquad (3)$$

A more accurate expression appears to be that proposed by Petermann, where the Petermann mode field radius:

$$W_P^2 = \frac{2P_{max}}{\left[ \frac{2\pi}{\lambda} \right]^2 \int_0^\infty \frac{dP}{d\theta} \sin^2\theta \, d\theta} \qquad (4)$$

This expression is a function of $dP/d\theta$ and therefore the mode field radius cannot be derived (as for a Gaussian assumption) by a single measurement of P and $\theta$. For deriving the mode field radius where «W» is a function of $dP/d\theta$ a number or measurements of P and $\theta$ are taken following successive repositioning of the apertured disc.

In practising the method, an accurate numerical calculation of «W» requires at least 30 data points corresponding to 30 step positions of the apertured disc. This relatively large number of measurements is easily accomplished using microprocessor control to attain precise stepping of the motor 23 and processing of inputs from the photodiode 24.

Referring to Figure 2 there is shown the normalized power $P/P_{max}$ as a function of $(2\pi/\lambda)\sin\theta$ at wavelengths of 1300 and 1550 nanometers for a particular test fiber. The Petermann mode field radius $W_P$ derived from the illustrated curves in respect of light at 1550 nanometers for example was 5.85 microns. This compares with a mode field radius $W_G$ of 6.18 microns obtained assuming a Gaussian distribution.

Although in the embodiment described, an LED and a monochromator are used to generate light of narrow spectral width, the combination can be replaced by a series of switchable lasers at spaced wavelengths.

## Claims

1. A method for determining the mode field radius «W», of a single mode optical fiber comprising projecting light of wavelength $\lambda$ through the optical fiber (16), the method characterized by positioning a fixed diameter aperture (20) in front of an exit face of the optical fiber (16) in the far field pattern of light emitted therefrom, moving the aperture (20) on the axis of emitted light through a series of acceptance angles $\theta$, measuring the power P passing through the aperture (20) corresponding to said acceptance angles, and obtaining a value of mode field radius in terms of $\lambda$, P and $\theta$.

2. A test set for determining the mode field radius «W», of a single mode optical fiber (16) comprising projection means (10, 12, 14, 15) for projecting light through the fiber (16), and characterized by fixed diameter aperture (20) located in front of an exit face of the optical fiber within a far-field pattern of light emitted therefrom, carriage means (21, 23, 25, 27) for moving the aperture on the axis of light emitted from the fiber through a series of acceptance angles $\theta$, means (24, 26, 28) for measuring the power P passing through the aperture (20) corresponding to the acceptance angles, and signal processing means (28) for obtaining a value of mode field radius «W» in terms of $\lambda$, P and $\theta$.

3. A test set as claimed in claim 2 further characterized in that the projection means includes a light source (10) and a monochromator (12) for wavelength selection.

4. A test set as claimed in claim 2 further characterized in that the carriage means comprises a mounting (21, 23) for a body defining said aperture (20), a linear track parallel to the access of the fiber, a bearing between said mounting and the linear track, and a stepper motor (27) for driving the mounting along the track.

5. A test set as claimed in claim 4 further characterized in that the measuring means comprises a photodetector (24), and amplifier (26) for amplifying the photodetector output, and a lens (22) to focus light passed by said aperture (20) onto the photodetector (24).

6. A test set as claimed in claim 2 further characterized by a chopper (14) for establishing an AC component on light projected into the fiber (16) and a lock-in amplifier (26) tuned to the frequency of said chopper, the chopper (14) and the lock-in amplifier (26) operable to improve signal-to-noise ratio of the measuring means.

7. A test set as claimed in claim 4 further characterized in that said signal processor (28) has a first output to control the stepper motor (27), the signal processor being programmed to move said carriage (23) through a predetermined sequence of steps.

8. A test set as claimed in claim 7 further characterized in that the signal processor (28) has a second output to the monochromator (12) whereby to vary the output wavelength within a predetermined range.

## Patentansprüche

1. Verfahren zum Bestimmen des Modenfeldradius «W» einer optischen Faser vom Monomodus-Typ mit Projizieren von Licht der Wellenlänge λ durch die optische Faser (16), dadurch gekennzeichnet, daß eine Apertur (20) mit festem Durchmesser vor einer Austrittsfläche der optischen Faser (16) im Fernfeld-Muster daraus emittierten Lichtes angeordnet wird, daß die Apertur (20) an der Achse des emittierten Lichtes durch eine Reihe von Akzeptanz-Winkeln θ bewegt wird, daß die durch die Apertur (20) hindurchtretende Leistung P gemessen wird, entsprechend den Akzeptanz-Winkeln, und daß ein Wert des Modenfeldradius, ausgedrückt in λ, P und θ, erhalten wird.

2. Untersuchungssatz zur Bestimmung des Modenfeldradius «W» einer optischen Faser (16) vom Monomodus-Typ mit Projektionsmitteln (10, 12, 14, 15) zum Projizieren von Licht durch die Faser (16) und gekennzeichnet durch eine vor einer Austrittsfläche der optischen Faser innerhalb eines Fernfeldmusters von daraus emittiertem Licht angeordnete Apertur (20) mit festem Durchmesser, Schlittenmittel (21, 23, 25, 27) zum Bewegen der Apertur (20) an der Achse aus der Faser ermittierten Lichtes durch eine Reihe von Akzeptanz-Winkeln θ, Mittel (24, 26, 28) zum Messen der durch die Apertur (20) hindurchtretenden Leistung P entsprechend den Akzeptanz-Winkeln, und Signalverarbeitungsmittel (28), um einen Wert des Modenfeldradius «W», ausgedrückt in λ, P und θ, zu erhalten.

3. Testsatz nach Anspruch 2, weiter dadurch gekennzeichnet, daß das Projektionsmittel eine Lichtquelle (10) und einen Monochromator (12) zur Wellenlängenauswahl enthält.

4. Testsatz nach Anspruch 2, weiter dadurch gekennzeichnet, daß das Schlittenmittel eine Befestigung (21, 23) für ein die Apertur (20) bestimmendes Gehäuse, eine lineare Bahn parallel zur Faserachse, ein Lager zwischen der Befestigung und der linearen Bahn und einen Schrittmotor (27) zum Antrieb der Befestigung längs der Bahn umfaßt.

5. Testsatz nach Anspruch 4, weiter dadurch gekennzeichnet, daß das Meßmittel einen Photodetektor (24), einen Verstärker (26) zum Verstärken des Photodetektor-Ausgangssignals und eine Linse (22) zum Fokussieren durch die Apertur (20) hindurchtretenden Lichtes auf den Photodetektor (24) umfaßt.

6. Testsatz nach Anspruch 2, weiter gekennzeichnet durch einen Zerhacker (40) zum Schaffen einer Wechselkomponente des in die Faser (16) projizierten Lichtes und einen auf die Frequenz des Zerhackers abgestimmten Lock-in-Verstärker (26), wobei der Zerhacker (14) und der Lock-in-Verstärker (26) zur Verbesserung des Signal/Rausch-Verhältnisses des Meßmittels betreibbar sind.

7. Testsatz nach Anspruch 4, weiter dadurch gekennzeichnet, daß der Signalprozessor (28) einen ersten Ausgang zur Steuerung des Schrittmotors (27) besitzt, wobei der Signalprozessor programmiert ist, den Schlitten (23) durch eine vorbestimmte Schrittfolge zu bewegen.

8. Testsatz nach Anspruch 7, weiter dadurch gekennzeichnet, daß der Signalprozessor einen zweiten Ausgang zum Monochromator (12) besitzt, um dadurch die Ausgangswellenlänge in einem vorbestimmten Bereich zu ändern.

## Revendications

1. Procédé pour déterminer le rayon d'ouverture «W» de mode, d'une fibre optique à mode unique comprenant la projection de lumière de longueur d'onde λ dans la fibre optique (16), le procédé étant caractérisé par les étapes consistant à mettre en place une ouverture de diamètre fixe (20) à l'avant d'une face de sortie de la fibre optique (16) dans le diagramme dans le champ lointain de la lumière émise par celle-ci, à déplacer l'ouverture (20) sur l'axe de la lumière émise dans une série d'angles de réception θ, à mesurer la puissance P traversant l'ouverture (20) correspondant aux angles de réception, et à obtenir une valeur du rayon de l'ouverture du mode en termes de λ, P et θ.

2. Ensemble d'essai pour déterminer le rayon d'ouverture «W» de mode, d'une fibre optique à mode unique (16), comprenant un moyen de projection (10, 12, 14, 15) pour projeter la lumière dans la fibre (16), et caractérisé par une ouverture de diamètre fixe (20) placée à l'avant d'une face de sortie de la fibre optique à l'intérieur du diagramme dans le champ lointain de la lumière émise par celle-ci, un moyen de chariot (21, 23, 25, 27) pour déplacer l'ouverture sur l'axe de la lumière émise par la fibre dans une série d'angles de réception θ, un moyen (24, 26, 28) pour mesurer la puissance P traversant l'ouverture (20) correspondant aux angles de réception, et un moyen de traitement du signal (28) pour obtenir une valeur du rayon d'ouverture «W» du mode en termes de λ, P et θ.

3. Ensemble d'essai selon la revendication 2, caractérisé en outre en ce que le moyen de projection comprend une source lumineuse (10) et un monochromateur (12) pour la sélection de la longueur d'onde.

4. Ensemble d'essai selon la revendication 2, caractérisé en outre en ce que le moyen de chariot comprend une monture (21, 23) pour un corps définissant l'ouverture (20), une piste linéaire parallèle à l'accès de la fibre, un roulement entre la monture et un moteur pas à pas (27) pour entraîner la monture le long de la piste.

5. Ensemble d'essai selon la revendication 4, caractérisé en outre en ce que le moyen de mesure comprend un photodétecteur (24), un amplificateur (26) pour amplifier la sortie du photodétecteur, et une lentille (22) pour focaliser la lumière ayant traversé l'ouverture (20) sur le photodétecteur (24).

6. Ensemble d'essai selon la revendication 2, caractérisé en outre par un hacheur (14) pour établir une composante à courant alternatif sur la lumièrel projetée dans la fibre (16) et un amplificateur de verrouillage (26) accordé sur la fréquence du hacheur, le hacheur (14) et l'amplificateur de verrouillage (26) servant à améliorer le rapport signal/bruit du moyen de mesure.

7. Ensemble d'essai selon la revendication 4, caractérisé en outre en ce que le processeur de signal (28) comporte une première sortie pour commander le moteur pas à pas (27), le processeur de signal étant programmé pour déplacer le chariot (23) dans une séquence prédéterminée d'étapes.

8. Ensemble d'essai selon la revendication 7, caractérisé en outre en ce que le processeur de signal (28) a une seconde sortie vers le monochromateur (12), d'où il résulte la variation de la longueur d'onde de sortie dans une gamme prédéterminée.

FIG. 1

FIG. 2